# FASCICULE DE BREVET EUROPEEN

(11) **EP 4 598 715 B1**
(45) Date de publication et mention de la délivrance du brevet: **23.09.2026**
(21) Numéro de dépôt: 23783414.8
(22) Date de dépôt: 04.10.2023
(51) Int. Cl.: B25J 19/00

(54) **ARCEAU POUR HOUSSE DE ROBOT**
RING FÜR EINE ROBOTERABDECKUNG
HOOP FOR A ROBOT COVER

(30) Priorité: 06.10.2022 FR 2210227
(43) Date de publication de la demande: 13.08.2025
(73) Titulaire: Advanced Systems of Protection, SAS, 54690 Eulmont (FR)
(72) Inventeur: GRANDIEU, Fabien, 54690 Eulmont (FR); ARMBRUSTER, Olivier, 54690 Eulmont (FR)
(74) Mandataire: Vièl, Frédérique
(86) Numéro de dépôt international: PCT/EP2023/077401
(87) Numéro de publication internationale: WO 2024/074534

(56) Documents cités:
- EP-A2- 1 458 073
- CN-A- 112 192 613
- JP-A- H0 577 194
- JP-A- H05 253 887

## Description

### Domaine technique

L'invention concerne un arceau pour arrimer une housse de protection sur la base d'un robot, notamment d'un robot articulé. L'arceau est constitué de plusieurs segments qui mis bout à bout et reliés ensemble par des moyens de connexion forment l'arceau.

### Technique antérieure

Il est courant de protéger les robots industriels par une housse. Celle-ci est fixée d'une part sur le bras et d'autre part dans le bas du robot au niveau de sa base afin que la housse puisse suivre les mouvements du robot sans le gêner. Pour cela, les robots sont munis d'un arceau fixé à leur base qui peut être rotative.

Les arceaux sont de forme circulaire et sont constitués généralement de deux ou trois segments en arc de cercle reliés les uns aux autres pour former un cercle. Voir par exemple le document JP H05 253887 A. L'arceau est réalisé dans une bande en acier cintrée. Pour le protéger, l'arceau est soit peint, soit réalisé en acier inoxydable. L'arceau est muni de pattes de montage pour le fixer au robot. Les arceaux existent en différentes tailles en fonction de la taille de la base du robot et/ou de l'espace disponible autour de cette base. La position des pattes de montage est propre à chaque robot.

Les arceaux de l'état de la technique ont plusieurs inconvénients dus en partie à leur forme cintrée :
a. À l'état démonté, l'arceau nécessite beaucoup de place en raison de la forme cintrée de ces constituants, ce qui est un inconvénient d'une part pour la livraison, et d'autre part pour le stockage.
b. Ils ne peuvent être fabriqués que dans un métal pouvant être cintré, ce qui concrètement limite le choix du matériau à l'acier. Ils sont donc assez lourds et de plus en plus coûteux à fabriquer.
c. Enfin, la position des pattes sur l'arceau varie d'un robot à l'autre. Si un arceau doit servir à deux robots différents, il faut éventuellement prévoir deux jeux de points d'attache, ou réaliser postérieurement un deuxième jeu de points d'attache. La position des points d'attache doit être très précise pour assurer un montage sans tension de l'arceau. Dans la pratique, les arceaux sont faits à façon pour chaque type de robot.

L'objectif de l'invention est de remédier à ces inconvénients.

### Exposé de l'invention

Cet objectif est atteint avec l'arceau de l'invention dans lequel les segments sont constitués par des entretoises droites et les moyens de connexion sont constitués par des pièces de connexion. L'arceau a N entretoises et N pièces de connexion, où N est supérieur ou égal à 3.

En particulier, les entretoises peuvent être constituées par des profilés droits et les pièces de connexion par des pièces d'angle distinctes des profilés droits et permettant de relier deux profilés droits successifs en formant un angle α égal à $180 ° ⋅ \left(\frac{N - 2}{N}\right)$, de sorte que l'arceau a la forme d'un polygone régulier.

Chaque entretoise peut présenter deux extrémités qui sont chacune munies de premiers moyens de liaison. De même, chaque pièce de connexion peut être munie de deuxièmes moyens de liaison complémentaires des premiers moyens de liaison. Dans ce cas, les premiers moyens de liaison sont de préférence conçus sous la forme d'un alésage et les deuxièmes moyens de liaison sont conçus sous la forme de vis à visser dans les alésages des entretoises. Les alésages sont de préférence placés dans des faces frontales situées aux extrémités des entretoises, et les vis sont en appui contre des parois d'extrémité des pièces de connexion parallèles aux faces frontales des entretoises.

Il est préférable de prévoir des éléments de renfort pour renforcer la connexion par les pièces de connexion, chaque élément de renfort étant de préférence fixé à deux entretoises successives.

Afin de permettre d'ancrer des éléments sur l'arceau, notamment les éléments de renfort, il est préférable de munir au moins une entretoise, de préférence chaque entretoise, d'au moins une rainure s'étendant dans la direction de sa longueur, de préférence sur toute sa longueur.

Afin de monter l'arceau sur le robot, on peut prévoir des moyens de montage. Les moyens de montage peuvent être constitués par des pattes de montage attachées à l'arceau, de préférence de façon réversible. Les pattes de montage peuvent être ancrées dans une ou plusieurs rainures longitudinales réalisées dans une ou plusieurs entretoises.

Des moyens d'arrimage peuvent être prévus pour arrimer la housse sur l'arceau. Dans ce cas, l'arceau ne sert pas uniquement à écarter du robot le bas de la housse, mais également de l'y fixer. Les moyens d'arrimage sont constitués par exemple par des tourniquets, des boutons-pression, des bandes autoagrippantes, des aimants, des fermetures à glissière, des crochets, des élastiques, des cordons, des vis/écrous, des colliers ou autres dispositifs similaires, ou une combinaison des éléments précités. Une partie au moins des moyens d'arrimage peut être placée sur un support, lui-même fixé sur l'arceau, de préférence par ancrage dans une rainure longitudinale réalisée dans une entretoise.

Des moyens anti-déchirement ou anti-poche peuvent être prévus. Ceux-ci peuvent être fixés à l'arceau dans une ou plusieurs rainures longitudinales réalisées dans une ou plusieurs entretoises. Les moyens anti-déchirement ou anti-poche peuvent être constitués d'une ou plusieurs tôles anti-déchirement ou anti-poche et/ou d'un filet anti-déchirement ou anti-poche.

Dans une variante de réalisation, les entretoises sont constituées par des profilés droits, et chaque entretoise est munie d'une pièce de connexion intégrée de sorte à former une pièce d'un seul tenant. Les autres options évoquées précédemment avec un arceau constitué d'entretoises et de pièces d'angles distinctes des entretoises s'appliquent à ce mode de réalisation.

### Brève description des dessins

L'invention est décrite plus en détail ci-dessous à l'aide des figures qui montrent :
[Fig. 1] (a) une vue en perspective de l'arceau monté sur un robot, (b) un agrandissement montrant le montage de l'arceau sur le robot ;
[Fig. 2] des vues en perspective de l'arceau dans une configuration de base (a) vu de dessus et (b) vu de dessous ;
[Fig. 3] une vue en perspective d'un segment ;
[Fig. 4] des vues en perspectives d'une pièce d'angle (a) vu de l'intérieur, (b) vu de l'extérieur et (c) vu de l'extérieur avec un cache ;
[Fig. 5] une vue en perspective d'une patte de montage ;
[Fig. 6] (a) une vue en perspective de l'arceau de la figure 2 muni de tôles anti-déchirement ou anti-poche, et (b) une vue de dessus des tôles anti-déchirement ou anti-poche ;
[Fig. 7] (a) une vue en perspective agrandie d'un angle d'un arceau muni d'un renfort et (b) une vue en perspective du renfort ;
[Fig. 8] (a) une vue en perspective d'un arceau de l'état de la technique et des vues en perspective d'un robot muni (b) de cet arceau de l'état de la technique et (c) d'un arceau selon l'invention ;
[Fig. 9] différents exemples de réalisation.

### Description détaillée

L'arceau (1) de l'invention est destiné à fixer une housse de protection dans le bas d'un robot, notamment d'un robot articulé (R). L'arceau (1) est fixé à la base (R1) du robot de sorte que la base est située en totalité, ou pour le moins en grande partie, à l'abri à l'intérieur de la housse. Si la base est pivotante, l'arceau suit le mouvement de rotation de la base.

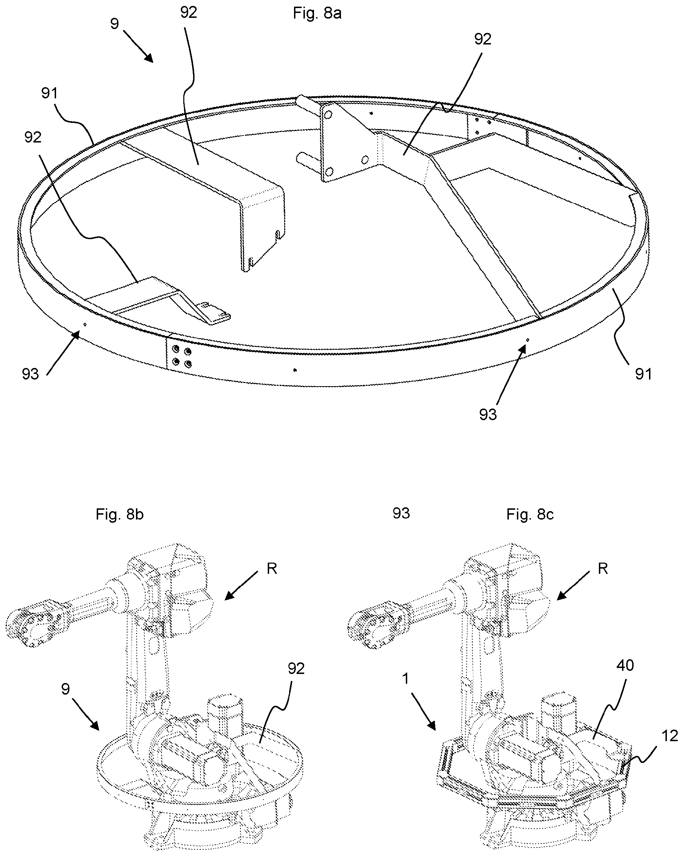

La figure 8a montre un arceau de l'état de la technique (9). Il est constitué de deux segments en demi-cercle (91) reliés ensemble par chevauchement de leurs extrémités pour former l'arceau circulaire. Dans l'exemple du robot présenté à la figure 8b, trois pattes de montage (92) sont nécessaires pour monter cet arceau sur le robot. Pour cela, il faut prévoir les points d'attache (93) en des endroits bien précis des segments en demi-cercle (91). Les points d'attache (93) doivent être réalisés avec précision pour éviter les tensions après le montage de l'arceau sur le robot. Cet arceau ne peut pas être utilisé sur un robot ayant d'autres points de fixation que le robot présenté à la figure 8b. Cela signifie que les arceaux sont en partie faits à façon pour chaque robot. De plus, à l'état démonté, l'arceau (9) occupe un espace important correspondant à la place d'un demi-cercle. Quand un segment en demi-cercle est abimé, c'est la moitié de l'arceau qu'il faut changer et refaire sur mesure.

L'arceau de l'invention (1) est constitué de trois constituants principaux :
- des entretoises (10) ;
- des pièces d'angle (20) ; et
- des pattes de montage (40).

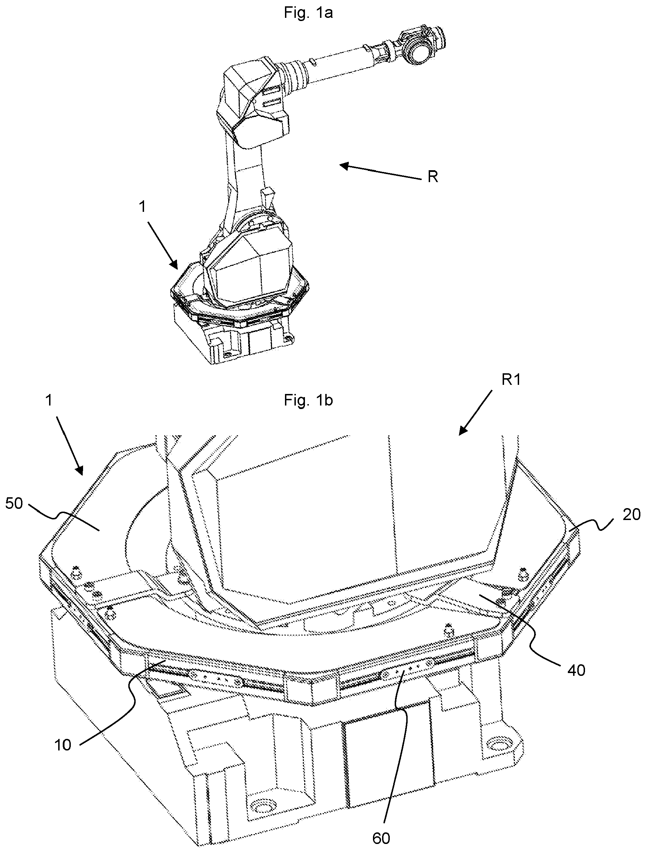

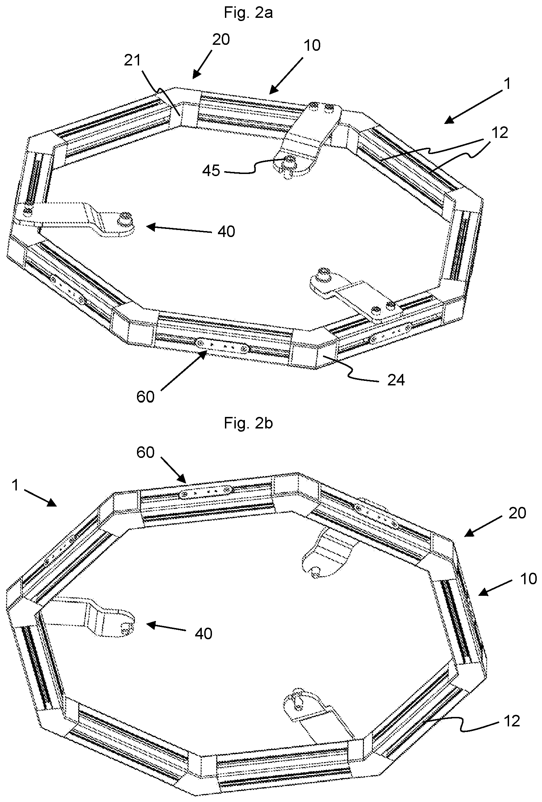

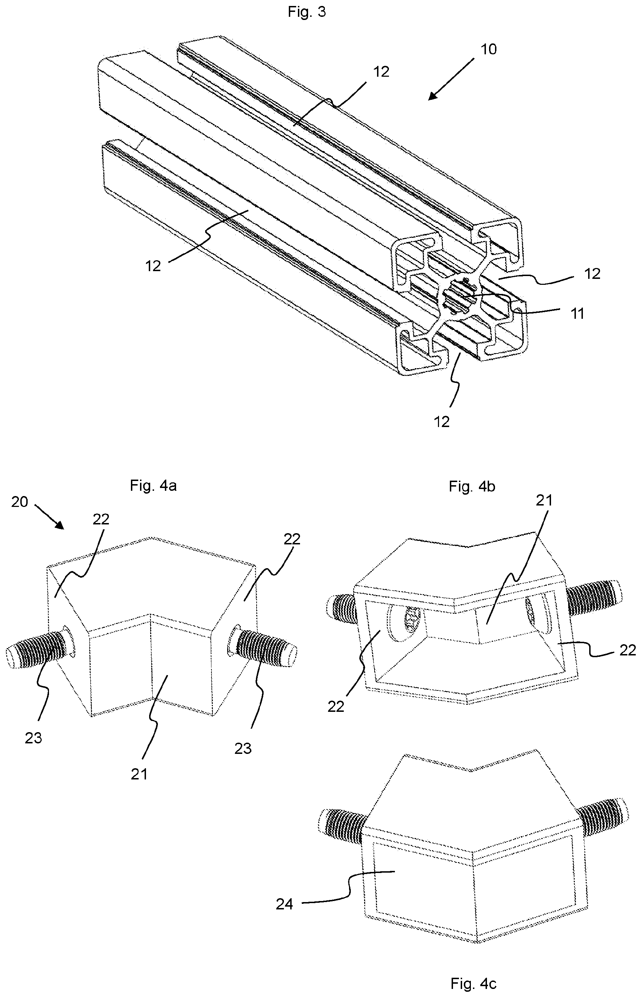

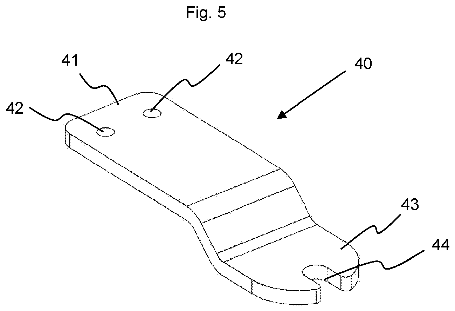

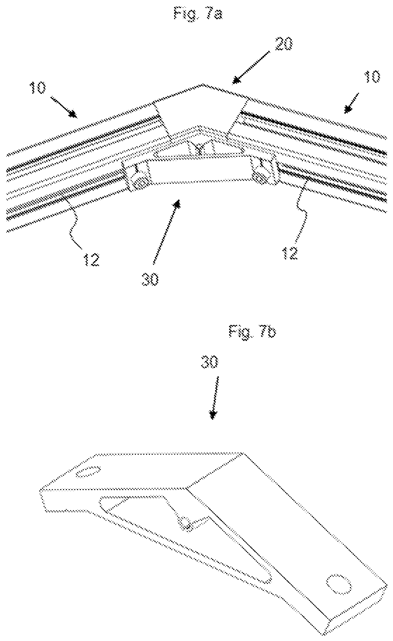

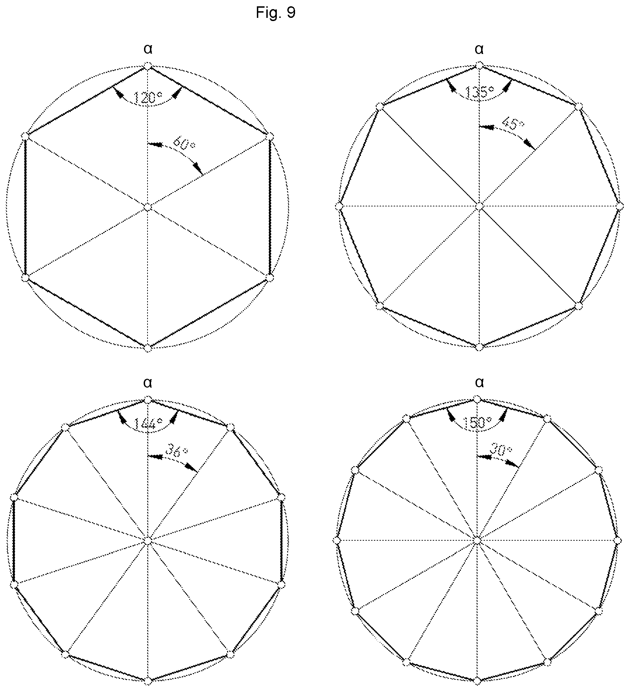

Les entretoises (10) sont de préférence droites de sorte que l'arceau obtenu forme un polygone. Il y a autant d'entretoises que de pièces d'angle (N entretoises et N pièces d'angle). Dans un arceau, les pièces d'angle et les entretoises sont de préférence toutes identiques de sorte à former un polygone régulier. Il est cependant envisageable, pour adapter l'arceau aux exigences spécifiques de l'environnement du robot, d'utiliser des pièces d'angle et/ou des entretoises différentes et de s'écarter ainsi d'un polygone régulier. Les pièces d'angle sont choisies en fonction du nombre de côtés souhaités. Plus les angles sont ouverts, plus le nombre d'angles est élevé et plus l'arceau s'approche de la force circulaire. De même, pour un même périmètre, plus les angles sont ouverts, plus la longueur des entretoises est petite. Généralement, on choisit des angles compris entre 90° correspondant à un polygone régulier à quatre côtés, et 30° correspondant à un polygone régulier à douze côtés. Des exemples de réalisations sont présentés à la figure 9. L'arceau de l'invention peut également n'avoir que trois côtés, ou en avoir plus de douze. La forme et les dimensions de l'arceau (1) dépendent de la place disponible et des dimensions de la base (R1) du robot (R). Dans l'exemple présenté plus en détail aux figures 1 à 7 et 8c, l'arceau est constitué de huit entretoises (10) et de huit pièces d'angle à 135°. Si l'arceau de l'invention doit remplacer un arceau existant, on pourra choisir ses dimensions pour que son périmètre corresponde à celui de l'arceau circulaire qu'il remplace. Ainsi la housse existante pourra être directement réutilisée.

Les entretoises (10) peuvent être constituées par exemple de tubes, notamment ronds, carrés ou hexagonaux, de profilés notamment plats, en L, en T ou en U, etc. Dans l'exemple présenté ici, les entretoises (10) sont constituées d'un profilé creux de section carrée présentant un alésage central (11) et une rainure (12) sur chaque face.

Les pièces d'angle (20) utilisées à tire d'exemple ici sont constituées d'un élément en U plié à 135° au niveau de sa base (21), et dont les deux extrémités sont fermées chacune par une paroi d'extrémité (22). Chaque paroi d'extrémité (22) est munie d'un alésage pour le passage d'une vis (23). Les deux parois latérales, la base du profilé en U et les parois d'extrémité forment une cavité ouverte du côté opposé à la base. Les vis (23) sont introduites dans la cavité par cette ouverture.

L'arceau est obtenu en reliant les entretoises (10) les unes aux autres par l'intermédiaire des pièces d'angle (20). Pour cela, les vis (23), de préférence autotarau-deuses, sont vissées depuis la cavité des pièces d'angle (20) dans l'alésage central (11) des entretoises (10) en passant par les alésages réalisés dans les parois d'extrémité (22). Le diamètre de l'alésage est dimensionné pour recevoir et retenir les vis (23). Après vissage, les têtes de vis se trouvent dans la cavité de la pièce d'angle en appui contre la face intérieure des parois d'extrémités (22). Les vis (23) d'une part et les alésages centraux (11) d'autre part constituent des moyens de liaison. Quand l'arceau est formé et les vis bien serrées, il est possible de fermer l'ouverture d'accès à la cavité de la pièce d'angle par un cache (24). Les entretoises de section carrée sont de préférence orientées de sorte à avoir deux faces parallèles au plan de l'arceau (face supérieure et face inférieure), une face orientée vers le centre de l'arceau (face intérieure) et une face orientée vers l'extérieur de l'arceau (face extérieure).

Selon les besoins, et notamment si l'arceau est de grande taille, il peut être préférable de renforcer les angles par des renforts d'angle (30). Ceux-ci sont fixés aux entretoises (10), de préférence dans la rainure (12) faisant face au centre de l'arceau, c'est-à-dire celle réalisée dans la face interne de l'entretoise. Ces renforts d'angle (30) permettent également de maintenir l'orientation des entretoises, même si des forces exercées dessus tendaient à les faire pivoter.

Les moyens de montage de l'arceau sur le robot sont de préférence constitués par des pattes de montage (40). Ces pattes de montage sont semblables à celles des arceaux traditionnels. Tout au plus, leur extrémité d'attache (41) pour les attacher à l'arceau est-elle adaptée. Cela est bien visible sur les figures 8b et 8c montrant chacune un même robot muni respectivement d'un arceau traditionnel (9) et d'un arceau selon l'invention (1). Des moyens d'attache sont réalisés dans les extrémités d'attache (41) pour attacher les pattes sur l'arceau. Ces moyens d'attache se présentent par exemple sous la forme d'un ou plusieurs alésages (42) pour le passage d'une vis. Les pattes de montage (40) sont de préférence attachées de façon réversible à l'arceau, notamment par ancrage dans une des rainures (12). Ce peut être la rainure de la face supérieure d'une entretoise, ou bien l'une des trois autres rainures selon les besoins. Cet ancrage dans une rainure ne nécessite aucun travail à façon. De plus, s'il devait arriver que l'arceau ou les pattes de montage soient déformés, il serait facile de supprimer d'éventuelles tensions résultantes en déplaçant les moyens d'attache (42) des pattes de montage dans leur rainure respective. La deuxième extrémité (43) des pattes de montage est munie de moyens de fixation (44) pour fixer l'arceau au robot. Ces moyens de fixation peuvent se présenter comme ici sous la forme d'une fente de fixation pour une fixation par vis (45).

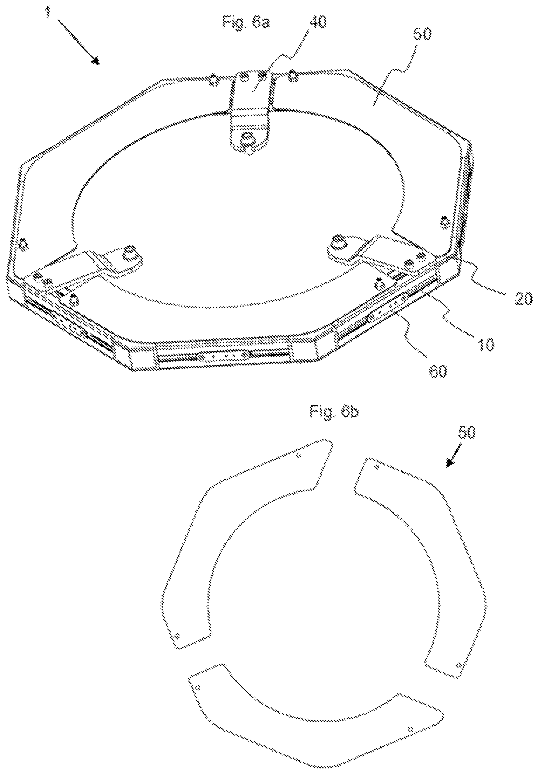

Pour éviter que la housse dans une position dans laquelle elle ne serait pas tendue (bras déplié, bras replié, etc.) tombe dans l'espace situé entre l'arceau (1) et la base du robot (R1) en formant une poche, au risque de s'y coincer ou de se déchirer, il est préférable de fermer cet espace. Pour cela, on peut tendre un filet anti-déchirement ou anti-poche, ou mettre une ou plusieurs tôles (50). Les tôles les plus simples sont planes et ancrées dans les rainures des faces supérieures des entretoises. On peut également les munir d'un bord plié pour les ancrer dans les rainures des faces intérieures ou extérieures. Ici encore, l'ancrage dans une rainure ne nécessite aucun travail à façon spécifique. Dans l'exemple de la figure 6, l'arceau est muni de trois pattes de montage (40) et de trois tôles (50) formant un plateau annulaire fermant les espaces entre les pattes de montage.

Des moyens d'arrimage sont prévus pour arrimer la housse, notamment le bas de la housse à l'arceau. Ces moyens d'arrimage sont constitués par exemple de tourniquets, de boutons-pression, de bande autoagrippantes de type Velcro^{®}, de fermetures à glissière de type fermeture éclair^{®}, de boutons, de boutons champignons, etc. Ces moyens d'arrimage peuvent être fixés directement sur l'arceau. Il est également possible de les fixer sur un support (60) qui lui-même est fixé à l'arceau. Les moyens d'arrimage, ou le support (60) sont de préférence ancrés dans une des rainures, en particulier dans une des rainures des faces extérieures des entretoises.

Les rainures (12), tout comme les cavités des pièces d'angle (20), peuvent être fermées par des caches pour éviter que la poussière, ou d'autres saletés, ne viennent s'y déposer.

En choisissant des entretoises droites, il est possible de choisir un matériau qui ne se laisse pas cintrer. Notamment, il est possible de choisir de l'aluminium, nettement plus léger que l'acier et ne nécessitant pas de traitement anticorrosion. De plus, lorsque l'arceau est démonté et rangé, les entretoises droites prennent moins de place que les segments cintrés de l'état de la technique. Cela signifie que les frais de transport sont plus économiques, et ce d'autant plus si on choisi de l'aluminium plutôt que de l'acier. À cela s'ajoute un espace de stockage moindre.

Avec un même jeu de pièces d'angle, il est possible de réaliser des arceaux de différentes tailles en modifiant la taille des entretoises. De même, avec des entretoises d'une même taille, il est possible de réaliser des arceaux de différentes tailles en changeant l'angle des pièces d'angle. Avec un stock relativement réduit de pièces standard, il est donc possible de réaliser un grand nombre d'arceaux différents. Cela contribue à diminuer considérablement les coûts de fabrication.

Si l'arceau selon l'invention doit remplacer un arceau existant, il est facile d'adapter le nouvel arceau en coupant les entretoises aux dimensions requises pour conserver le même périmètre que l'ancien arceau.

L'arceau modulaire de l'invention permet, si nécessaire, de changer une partie seulement de l'arceau.

En choisissant des entretoises profilées avec des rainures, il est possible d'adapter un même arceau à tous les robots nécessitant un même périmètre d'arceau. Seules les pattes de montage, qui sont spécifiques à chaque robot, doivent être faites à façon, comme dans l'état de la technique. En raison de la grande liberté de fixation due aux rainures, la précision des moyens d'attache sur les pattes de montage est moins critique qu'avec les arceaux de l'état de la technique. De surcroit, si l'arceau ou les pattes se déforment, il est possible de diminuer, voire de supprimer, d'éventuelles tensions en déplaçant les moyens d'attache dans les rainures. Si une des entretoises ou une des pièces d'angle devait être trop endommagée, il est facile de le remplacer par une pièce standard à ce type d'arceau. De plus, l'utilisateur final a la possibilité de fixer d'autres objets sur l'arceau, notamment sur le chant de l'arceau, notamment dans les rainures extérieures.

L'arceau modulaire de l'invention, en particulier celui qui est représenté sur les figures, utilise des pièces courantes, ce qui contribue encore à diminuer le prix de l'arceau.

De même, l'homme du métier comprend qu'il serait possible d'utiliser d'autres moyens de connexion que les pièces d'angle. Par exemple, il serait possible de renoncer aux pièces d'angle et de couper les deux extrémités de l'entretoise en biseau d'un angle α/2 (donc à 67,5° pour un arceau octogonal) par rapport la face extérieure de l'entretoise et d'abouter directement les entretoises par leurs biseaux en les reliant par vissage les unes sur les autres ou en interposant une pièce de liaison. Une autre solution serait de couper les deux extrémités en biseau d'un angle α (donc à 135° pour un arceau octogonal) par rapport à la face extérieure de l'entretoise et d'abouter un biseau d'une extrémité, sur l'extrémité intérieure de l'entretoise suivante, puis de les relier par vissage ou par interposition de pièces de liaison. Les extrémités biseautées constituent des pièces de connexion qui sont donc intégrées aux entretoises de sorte à former une pièce d'un seul tenant. Les vis et les pièces de liaison constituent les moyens de liaison.

### Liste des signes de référence

- R: Robot, notamment robot articulé
R1 Base du robot
R2 Socle
- 1: Arceau de l'invention
10 Entretoises
11 Alésage central (1^{ers} moyens de liaison)
12 Rainures
- 20: Pièces d'angle (moyens de connexion)
21 Base de l'élément en U
22 Parois d'extrémité
23 Vis (2^{èmes} moyens de liaison)
24 Caches
- 30: Renforts d'angle
- 40: Pattes de montage (moyens de montage)
41 Extrémité d'attache
42 Alésage (moyens d'attache)
43 2^{ème} extrémité (extrémité de fixation)
44 Moyens de fixation
45 Vis de fixation
- 50: Tôles anti-déchirement ou anti-poche
- 60: Barrettes
- 9: Arceau de l'état de la technique
91 Segments
92 Pattes de montage
93 Points d'attache
- N: Nombre d'entretoises et de pièces d'angle, N ≥ 3

## Revendications

1. Arceau (1) pour l'arrimage d'une housse de protection sur la base (R1) d'un robot (R), l'arceau étant constitué de plusieurs segments qui mis bout à bout et reliés ensemble par des moyens de connexion forment l'arceau, **caractérisé en ce que** les segments sont constitués par des entretoises droites (10) et les moyens de connexion sont constitués par des pièces de connexion (20), l'arceau ayant N entretoises (10) et N pièces de connexion (20), où N est supérieur ou égal à 3.

2. Arceau (1) selon la revendication 1, **caractérisé en ce que** les entretoises sont constituées par des profilés droits (10) et les pièces de connexion par des pièces d'angle (20) distinctes des profilés droits et permettant de relier deux profilés droits successifs en formant un angle α égal à $180 ° ⋅ \left(\frac{N - 2}{N}\right)$, de sorte que l'arceau a la forme d'un polygone régulier.

3. Arceau (1) selon l'une des revendications précédentes, **caractérisé en ce que** chaque entretoise (10) présente deux extrémités qui sont chacune munies de premiers moyens de liaison (11), et **en ce que** chaque pièce de connexion (20) est munie de deuxièmes moyens de liaison (23) complémentaires des premiers moyens de liaison (11).

4. Arceau (1) selon la revendication précédente, **caractérisé en ce que** les premiers moyens de liaison sont conçus sous la forme d'un alésage (11) et les deuxièmes moyens de liaison sont conçus sous la forme de vis (23) à visser dans les alésages des entretoises, les alésages étant de préférence placés dans des faces frontales situées aux extrémités des entretoises (10), et les vis étant en appui contre des parois d'extrémité (22) des pièces de connexion parallèles aux faces frontales des entretoises (10).

5. Arceau (1) selon l'une des revendications précédentes, **caractérisé en ce que** des éléments de renfort (30) sont prévus pour renforcer la connexion par les pièces de connexion (20), chaque élément de renfort (30) étant de préférence fixé à deux entretoises successives.

6. Arceau (1) selon l'une des revendications précédentes, **caractérisé en ce qu'**au moins une entretoise (10), de préférence chaque entretoise (10), est munie d'au moins une rainure (12) s'étendant dans la direction de sa longueur, de préférence sur toute sa longueur.

7. Arceau (1) selon l'une des revendications précédentes, **caractérisé en ce que** des moyens de montage (40) sont prévus pour le montage de l'arceau sur le robot (R).

8. Arceau (1) selon la revendication précédente, **caractérisé en ce que** les moyens de montage sont constitués par des pattes de montage (40) attachées à l'arceau, de préférence de façon réversible, de façon privilégiée dans une ou plusieurs rainures (12) longitudinales réalisées dans une ou plusieurs entretoises (10).

9. Arceau (1) selon l'une des revendications précédentes, **caractérisé en ce que** des moyens d'arrimage sont prévus pour arrimer la housse sur l'arceau.

10. Arceau (1) selon la revendication précédente, **caractérisé en ce que** les moyens d'arrimage sont constitués par des tourniquets, des boutons-pression, des bandes autoagrippantes, des aimants, des fermetures à glissière, des crochets, des élastiques, des cordons, des vis/écrous, des colliers.

11. Arceau (1) selon la revendication 9 ou 10, **caractérisé en ce qu'**une partie au moins des moyens d'arrimage est placée sur un support, lui-même fixé sur l'arceau, de préférence dans une rainure (12) longitudinale réalisée dans une entretoise.

12. Arceau (1) selon l'une des revendications précédentes, **caractérisé en ce que** des moyens anti-déchirement ou anti-poche sont prévus, lesquels sont fixés à l'arceau de préférence dans une ou plusieurs rainures (12) longitudinales réalisées dans une ou plusieurs entretoises, les moyens anti-déchirement ou anti-poche étant constitués d'une ou plusieurs tôles (50) et/ou d'un filet.

13. Arceau (1) selon la revendication 1, **caractérisé en ce que** les entretoises sont constituées par des profilés droits, et **en ce que** chaque entretoise est munie d'une pièce de connexion (20) intégrée de sorte à former une pièce d'un seul tenant.

## Patentansprüche

1. Bügel (1) zum Sichern einer Schutzhülle an der Basis (R1) eines Roboters (R), wobei der Bügel aus mehreren Segmenten besteht, die aneinandergesetzt und durch Verbindungsmittel miteinander verbunden den Bügel bilden, **dadurch gekennzeichnet, dass** die Segmente aus geraden Streben (10) bestehen und die Verbindungsmittel aus Verbindungsstücken (20) bestehen, wobei der Bügel N Streben (10) und N Verbindungsstücke (20) aufweist, wobei N größer als oder gleich 3 ist.

2. Bügel (1) nach Anspruch 1, **dadurch gekennzeichnet, dass** die Streben aus geraden Profilen (10) bestehen und die Verbindungsstücke aus von den geraden Profilen getrennten Winkelstücken (20) bestehen, die es ermöglichen, zwei aufeinanderfolgende gerade Profile unter Bildung eines Winkels α gleich $180 ° ⋅ \left(\frac{N - 2}{N}\right)$ miteinander zu verbinden, sodass der Bügel die Form eines regelmäßigen Polygons aufweist.

3. Bügel (1) nach einem der vorhergehenden Ansprüche, **dadurch gekennzeichnet, dass** jede Strebe (10) zwei Enden aufweist, die jeweils mit ersten Verbindungsmitteln (11) versehen sind, und dass jedes Verbindungsstück (20) mit zweiten Verbindungsmitteln (23) versehen ist, die zu den ersten Verbindungsmitteln (11) komplementär sind.

4. Bügel (1) nach dem vorhergehenden Anspruch, **dadurch gekennzeichnet, dass** die ersten Verbindungsmittel in Form einer Bohrung (11) ausgebildet sind und die zweiten Verbindungsmittel in Form von Schrauben (23) ausgebildet sind, die in die Bohrungen der Streben einzuschrauben sind, wobei die Bohrungen vorzugsweise in an den Enden der Streben (10) befindlichen Stirnflächen angeordnet sind und die Schrauben an Endwänden (22) der Verbindungsstücke anliegen, die parallel zu den Stirnflächen der Streben (10) verlaufen.

5. Bügel (1) nach einem der vorhergehenden Ansprüche, **dadurch gekennzeichnet, dass** Verstärkungselemente (30) vorgesehen sind, um die Verbindung durch die Verbindungsstücke (20) zu verstärken, wobei jedes Verstärkungselement (30) vorzugsweise an zwei aufeinanderfolgenden Streben befestigt ist.

6. Bügel (1) nach einem der vorhergehenden Ansprüche, **dadurch gekennzeichnet, dass** mindestens eine Strebe (10), vorzugsweise jede Strebe (10), mit mindestens einer Nut (12) versehen ist, die sich in ihrer Längsrichtung, vorzugsweise über ihre gesamte Länge, erstreckt.

7. Bügel (1) nach einem der vorhergehenden Ansprüche, **dadurch gekennzeichnet, dass** Montagemittel (40) zur Montage des Bügels an dem Roboter (R) vorgesehen sind.

8. Bügel (1) nach dem vorhergehenden Anspruch, **dadurch gekennzeichnet, dass** die Montagemittel aus Montagelaschen (40) bestehen, die vorzugsweise lösbar, besonders bevorzugt in einer oder mehreren Längsnuten (12), die in einer oder mehreren Streben (10) ausgebildet sind, an dem Bügel befestigt sind.

9. Bügel (1) nach einem der vorhergehenden Ansprüche, **dadurch gekennzeichnet, dass** Sicherungsmittel zum Sichern der Hülle an dem Bügel vorgesehen sind.

10. Bügel (1) nach dem vorhergehenden Anspruch, **dadurch gekennzeichnet, dass** die Sicherungsmittel aus Drehverschlüssen, Druckknöpfen, Klettbändern, Magneten, Reißverschlüssen, Haken, elastischen Bändern, Schnüren, Schrauben/Muttern, Schellen bestehen.

11. Bügel (1) nach Anspruch 9 oder 10, **dadurch gekennzeichnet, dass** zumindest ein Teil der Sicherungsmittel auf einem Träger angeordnet ist, der seinerseits an dem Bügel befestigt ist, vorzugsweise in einer in einer Strebe ausgebildeten Längsnut (12).

12. Bügel (1) nach einem der vorhergehenden Ansprüche, **dadurch gekennzeichnet, dass** Mittel gegen Zerreißen oder gegen Taschenbildung vorgesehen sind, die an dem Bügel vorzugsweise in einer oder mehreren Längsnuten (12), die in einer oder mehreren Streben ausgebildet sind, befestigt sind, wobei die Mittel gegen Zerreißen oder gegen Taschenbildung aus einem oder mehreren Blechen (50) und/oder einem Netz bestehen.

13. Bügel (1) nach Anspruch 1, **dadurch gekennzeichnet, dass** die Streben aus geraden Profilen bestehen und dass jede Strebe mit einem integrierten Verbindungsstück (20) versehen ist, sodass die Strebe und das Verbindungsstück ein einstückiges Bauteil bilden.

## Claims

1. Hoop (1) for securing a protective cover to the base (R1) of a robot (R), the hoop being constituted by a plurality of segments which, when placed end to end and connected together by connection means, form the hoop, **characterized in that** the segments consist of straight struts (10) and the connection means consist of connection pieces (20), the hoop having N struts (10) and N connection pieces (20), where N is greater than or equal to 3.

2. Hoop (1) according to claim 1, **characterized in that** the struts consist of straight profiles (10) and the connection pieces of angle pieces (20) distinct from the straight profiles and allowing two successive straight profiles to be connected to form an angle α equal to $180 ° ⋅ \left(\frac{N - 2}{N}\right)$, such that the hoop has the shape of a regular polygon.

3. Hoop (1) according to one of the preceding claims, **characterized in that** each strut (10) has two ends, each of which is provided with first connection means (11), and **in that** each connection piece (20) is provided with second connection means (23) complementary to the first connection means (11).

4. Hoop (1) according to the preceding claim, **characterized in that** the first connection means are designed in the form of a bore (11) and the second connection means are designed in the form of screws (23) to be screwed into the bores of the struts, the bores being preferably located in end faces at the ends of the struts (10), and the screws bearing against end walls (22) of the connection pieces parallel to the end faces of the struts (10).

5. Hoop (1) according to one of the preceding claims, **characterized in that** reinforcing elements (30) are provided for reinforcing the connection provided by the connection pieces (20), each reinforcing element (30) being preferably fastened to two successive struts.

6. Hoop (1) according to one of the preceding claims, **characterized in that** at least one strut (10), preferably each strut (10), is provided with at least one groove (12) extending in its longitudinal direction, preferably over its entire length.

7. Hoop (1) according to one of the preceding claims, **characterized in that** mounting means (40) are provided for mounting the hoop on the robot (R).

8. Hoop (1) according to the preceding claim, **characterized in that** the mounting means consist of mounting tabs (40) attached to the hoop, preferably in a reversible manner, particularly preferably in one or more longitudinal grooves (12) formed in one or more struts (10).

9. Hoop (1) according to one of the preceding claims, **characterized in that** securing means are provided for securing the cover to the hoop.

10. Hoop (1) according to the preceding claim, **characterized in that** the securing means consist of turn fasteners, snap fasteners, hook-and-loop strips, magnets, zippers, hooks, elastic bands, cords, screws/nuts, clamps.

11. Hoop (1) according to claim 9 or 10, **characterized in that** at least part of the securing means is arranged on a support, itself fastened to the hoop, preferably in a longitudinal groove (12) formed in a strut.

12. Hoop (1) according to one of the preceding claims, **characterized in that** means for preventing tearing or for preventing pocket formation are provided, which are fastened to the hoop preferably in one or more longitudinal grooves (12) formed in one or more struts, the means for preventing tearing or pocket formation consisting of one or more metal sheets (50) and/or a net.

13. Hoop (1) according to claim 1, **characterized in that** the struts consist of straight profiles, and **in that** each strut is provided with an integrated connection piece (20) so as to form a one-piece part.
